# EUROPEAN PATENT APPLICATION

(11) **EP 4 686 614 A1**
(43) Date of publication of application: **04.02.2026**
(21) Application number: 25192390.0
(22) Date of filing: 29.07.2025
(51) Int. Cl.: B60R 9/06, B60R 9/10

(54) **HITCH MOUNTED CARRIER FOR A MOTORCYCLE**

(30) Priority: 30.07.2024 US 202463676950 P
(71) Applicant: Pakmule, LLC, New Braunfels Texas 78131 (US)
(72) Inventor: SARTIN, Kansas, New Braunfels, 78130 (US); LARSEN, Michael, Bountiful, 84010 (US)
(74) Representative: Boco IP Oy Ab

(57) **Abstract**

A hitch mounted carrier for a motorcycle includes a hitch connector, a channel, and a ramp. The channel connected to a first portion of a connector upper surface of the hitch connector and includes a web, a first upper flange, a second upper flange, a first lower flange, and a second lower flange. The ramp being configured to extend between a storage position located within a gap formed between the first lower flange and the second lower flange, and a loading position in which the ramp is removed from the gap and a ramp proximal end is connected to a web terminal end.

## Description

### CROSS REFERENCES AND PRIORITIES

This Application claims priority to United States Provisional Application No. 63/676,950 filed on 30 July 2024, the teachings of which are incorporated by reference herein in their entirety.

### BACKGROUND

Motorcycles, in particular off-road motorcycles which may be referred to in some instances as dirt bikes, are commonly utilized for transportation and/or recreation. Dirt bikes are particularly well-known for use in recreational activities such as trail riding, sand dune climbing, off-road racing, and the like.

Owing to the recreational nature of certain motorcycles - in particular dirt bikes - many users choose not to ride them on public roads. Instead, users will transport their motorcycle to a recreational location utilizing another vehicle. Pickup truck beds may be utilized for transporting motorcycles to a recreational location, however, fitting the motorcycle in the truck bed may be problematic in particular when other equipment such as toolboxes, tents, coolers, and the like also need transported to the recreational location. Rolling trailers attached to and towed behind the vehicle with the motorcycle stored therein are another common solution. However, trailers can be expensive and difficult to tow - in particular to remote recreational locations.

Hitch mounted cargo carriers have been used to transport dirt bikes to recreational areas. However, many hitch mounted cargo carriers are often not designed for loading, transporting, and unloading motorcycles. Existing hitch mounted cargo carriers are extended a distance off the ground, requiring the user to either physically lift the dirt bike onto and off of the cargo carrier or improvise a ramp to push the dirt bike onto the cargo carrier. When a ramp is improvised, it often suffers from poor connection to the cargo carrier and frequently has to be stored inside the vehicle reducing space in the vehicle to transport other equipment such as toolboxes, tents, and coolers. In addition, existing hitch mounted cargo carriers often lack appropriate means for securing the dirt bike to the cargo carrier leaving users to improvise means to secure the dirt bike to the cargo carrier so that it does not become dislodged during transportation. Even those hitch mounted cargo carriers which are designed for loading, transporting, and unloading motorcycles often suffer from one or more of these issues.

The need exists, therefore, for an improved hitch mounted cargo carrier for transporting a motorcycle which is easy to load and unload, reduces or eliminates the need to store components such as ramps within the vehicle, and provides structures for safely securing the motorcycle to the hitch mounted carrier during transportation.

### SUMMARY

Described herein is a hitch mounted carrier for a motorcycle. The hitch mounted carrier includes a hitch connector, a channel, and a ramp. The hitch connecter includes a connector upper surface, a connector proximal end, and a connector terminal end. The connector proximal end and the connector terminal end defining a connector length.

The channel is connected to a first portion of the connector upper surface and includes a web, a first upper flange, a second upper flange, a first lower flange, and a second lower flange. The web includes a web upper surface, a web lower surface opposite the web upper surface, a web first edge, a web second edge opposite the web first edge, a web proximal end, and a web terminal end. The web proximal end and the web terminal end define a web length which is substantially perpendicular to the connector length. The first upper flange attaches to and extends from the web upper surface along at least a portion of the web first edge. The second upper flange attaches to and extends from the web upper surface along at least a portion of the web second edge. The first lower flange attaches to and extends from the web lower surface along at least a portion of the web first edge. The second lower flange attaches to and extends from the web lower surface along at least a portion of the web second edge.

The ramp has a ramp proximal end and a ramp terminal end which define a ramp length. The ramp extends between a storage position located within a gap formed between the first lower flange and the second lower flange, and a loading position in which the ramp is removed from the gap and the ramp proximal end interacts with the web terminal end.

In some embodiments, the first lower flange may include a first lip extending inwardly from a portion of a first lower flange longitudinal edge. In certain embodiments, the second lower flange may include a second lip extending inwardly from a portion of a second lower flange longitudinal edge.

In certain embodiments, the ramp may include a ramp upper surface, a ramp first edge, a ramp first flange attached to and extending from the ramp upper surface along at least a portion of the ramp first edge, a ramp second edge, and a ramp second flange attached to and extending from the ramp upper surface along at least a portion of the ramp second edge.

In some embodiments, the hitch mounted carrier may further include a lock pin. In such embodiments, the ramp terminal end may include a pin receiver while the web terminal end may include a pin hole. The lock pin may be configured to pass through the pin hole and into the pin receiver when the ramp is in the storage position.

In certain embodiments, the hitch mounted carrier may further include a wheel holder. The wheel holder may be attached to and extend upwardly from the channel at or about the web proximal end. In some embodiments, the wheel holder may include a hoop, a first brace, and a second brace. The hoop may have a hoop first end, a hoop second end, a first upright extending from the hoop first end, a second upright extending from the hoop second end, and a top member extending between the first upright opposite the hoop first end and the second upright opposite the hoop second end. The hoop first end may be attached to a first portion of the first upper flange. The hoop second end may be attached to a first portion of the second upper flange. The first brace may be attached to and extend between a second portion of the first upper flange and a portion of the first upright. The second brace may be attached to and extend between a second portion of the second upper flange and a portion of the second upright.

In some embodiments, the hitch mounted carrier may include a first strap mount attached to and extending from the connector upper surface between the connector proximal end and the connector terminal end. In certain such embodiments, the hitch mounted carrier may also include a second strap mount attached to and extending from the connector upper surface at the connector terminal end.

In certain embodiments, the hitch connector may include a hitch pin hole. When present, the hitch pin hole may pass through the hitch connector at the connector proximal end. A central axis of the hitch pin hole may be substantially parallel with the web length.

### BRIEF DESCRIPTION OF FIGURES

FIG. 1 illustrates a perspective view of a hitch mounted carrier for a motorcycle.
FIG. 2 illustrates a top view of a hitch mounted carrier for a motorcycle.
FIG. 3 illustrates a side view of a hitch mounted carrier for a motorcycle.
FIG. 4 illustrates a cut-away end view of a channel.
FIG. 5 illustrates a cut-away end view of a ramp stored inside of a channel.
FIG. 6 illustrates a close-up view of a locking mechanism for attaching a ramp to a channel.
FIG. 7 illustrates a side view of a hitch mounted carrier for a motorcycle with a ramp in an loading position.
FIG. 8 illustrates a close-up view of a wheel holder attached to a channel.
FIG. 9 illustrates a top view of a channel with a pair of strap mounts.
FIG. 10 illustrates an exploded view of a hitch mounted carrier for a motorcycle and a vehicle having a vehicle hitch.
FIG. 11 illustrates an assembled view of a hitch mounted carrier for a motorcycle connected to a vehicle having a vehicle hitch.
FIG. 12 illustrates a hitch mounted carrier for a motorcycle with a motorcycle in an unloaded position and a ramp in a storage position.
FIG. 13 illustrates a hitch mounted carrier for a motorcycle with a motorcycle in an unloaded position and a ramp in a loading position.
FIG. 14 illustrates a hitch mounted carrier for a motorcycle with a ramp in a loading position and a motorcycle positioned on the ramp.
FIG. 15 illustrates a hitch mounted carrier for a motorcycle with a motorcycle in a loaded position and a ramp in a loading position.
FIG. 16 illustrates a hitch mounted carrier for a motorcycle with a motorcycle in a loaded position and a ramp in a storage position.

### DETAILED DESCRIPTION

Described herein is a hitch mounted carrier for a motorcycle. Reference is made to the Figures in which, unless otherwise noted, like numbers refer to like structures. As described herein and in the claims, the following numbers refer to the following structures as noted in the Figures.
5 refers to a motorcycle.
10 refers to a hitch mounted carrier.
100 refers to a hitch connector.
110 refers to a connector upper surface.
120 refers to a connector proximal end.
130 refers to a connector terminal end.
140 refers to a connector length.
150 refers to a hitch pin hole.
155 refers to a central axis.
200 refers to a channel.
210 refers to a web.
211 refers to a web upper surface.
212 refers to a web lower surface.
213 refers to a web first edge.
214 refers to a web second edge.
215 refers to a web proximal end.
216 refers to a web terminal end.
218 refers to a pin hole.
220 refers to a first upper flange.
230 refers to a second upper flange.
240 refers to a first lower flange.
241 refers to a first lip.
242 refers to a first lower flange longitudinal edge.
250 refers to a second lower flange.
251 refers to a second lip.
252 refers to a second lower flange longitudinal edge.
260 refers to a gap.
300 refers to a ramp.
310 refers to a ramp proximal end.
320 refers to a ramp terminal end.
330 refers to a ramp upper surface.
340 refers to a ramp first edge.
345 refers to a ramp first flange.
350 refers to a ramp second edge.
355 refers to a ramp second flange.
400 refers to a lock pin.
500 refers to a wheel holder.
510 refers to a hoop.
511 refers to a hoop first end.
512 refers to a hoop second end.
513 refers to a first upright.
514 refers to a second upright.
515 refers to a top member.
520 refers to a first brace.
530 refers to a second brace.
540 refers to a tie down plate.
541 refers to a first tie down hole.
542 refers to a second tie down hole.
600 refers to a first strap mount.
610 refers to a second strap mount.

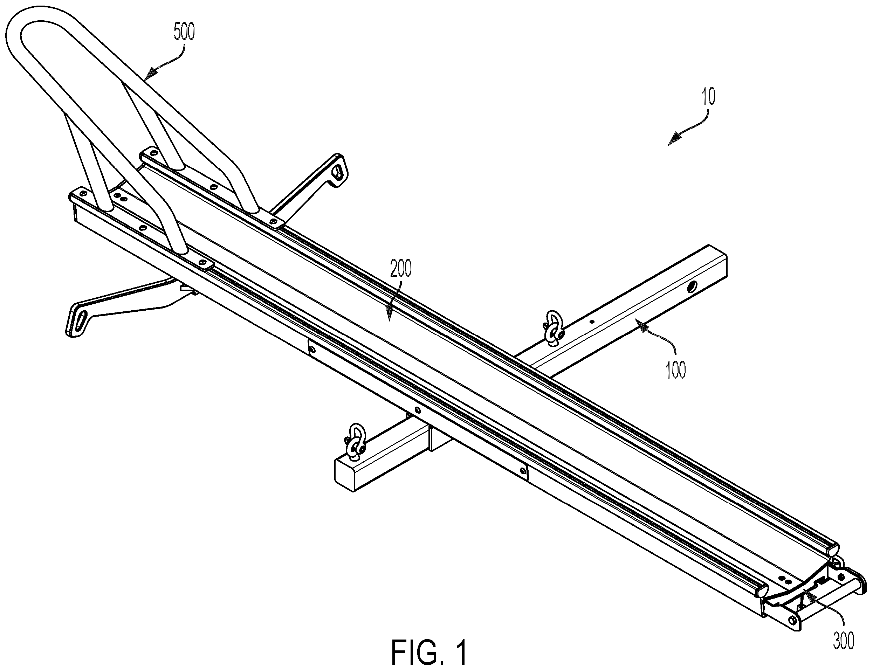

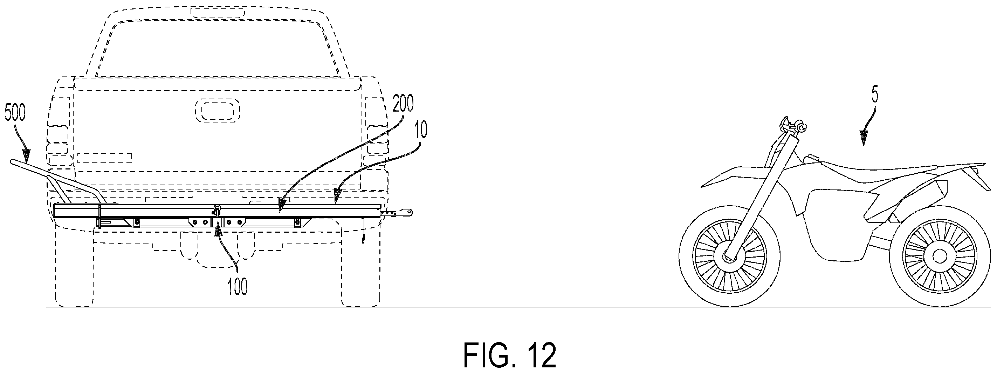

FIG. 1 illustrates a perspective view of an exemplary embodiment of a hitch mounted carrier (10) for a motorcycle ((5) as shown in FIG. 12). As shown in FIG. 1, the hitch mounted carrier includes a hitch connector (100), a channel (200), a ramp (300) removably engaged with the channel, and a wheel holder (500).

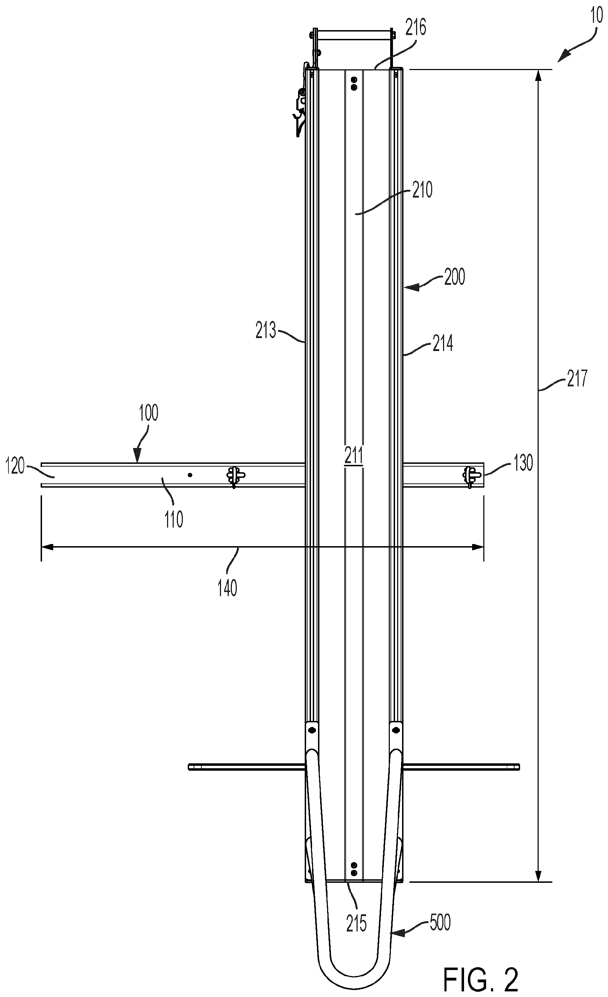

FIG. 2 illustrates a top view of an exemplary embodiment of a hitch mounted carrier (10) for a motorcycle ((5) as shown in FIG. 12) including additional features of a hitch connector (100) and a channel (200). As shown in FIG. 2, the hitch connector includes a connector proximal end (120) and a connector terminal end (130) opposite the connector proximal end. The connector proximal end and the connector terminal end define a connector length (140) spanning a distance between the connector proximal end and the connector terminal end. Preferably the hitch connector will have a substantially quadrilateral cross-sectional profile configured to extend into and out of a standard hitch receiver mounted to the rear of a vehicle such as a light duty pickup truck or sport utility vehicle.

The hitch connector (100) also includes a connector upper surface (110) with the channel (200) connected to a first portion of the connector upper surface. Preferably, the first portion of the connector upper surface to which the channel is connected will be located at or about the connector terminal end (130). The connection between the channel and the connector upper surface may take many forms. In some embodiments, said connection may be a permanent connection such as welding the channel to the connector upper surface or manufacturing the hitch connector and the channel of a single integral piece of material. In other embodiments, said connection may be a non-permanent connection in which a fastener - such as one or more bolts (with or without a nut), screws, rivets, clamps, or the like - connects the channel to the connector upper surface. In certain embodiments, one or both of the channel and/or the connector may include one or more plates permanently connected thereto with a fastener connecting the channel to the connector via the plate(s).

As shown in FIG. 2, the channel (200) includes a web (210). The web has a web first edge (213) and a web second edge (214) opposite the web first edge. The web first edge and the web second edge define a web width spanning a distance between the web first edge and the web second edge. Preferably, the web width will be greater than a tire width of one or both tires of a motorcycle ((5) as shown in FIG. 12) which is to be carried on the hitch mounted carrier (10).

The web also includes a web proximal end (215) and a web terminal end (216). The web proximal end and the web terminal end define a web length spanning a distance between the web proximal end and the web terminal end. Preferably, the web length will be greater than or equal to a length of a motorcycle ((5) as shown in FIG. 12) which is to be carried on the hitch mounted carrier (10). However, embodiments may exist in which the web length is less than the length of the motorcycle with a portion of one or both of the motorcycle wheel and tire assemblies extending past the corresponding web proximal end and/or web terminal end.

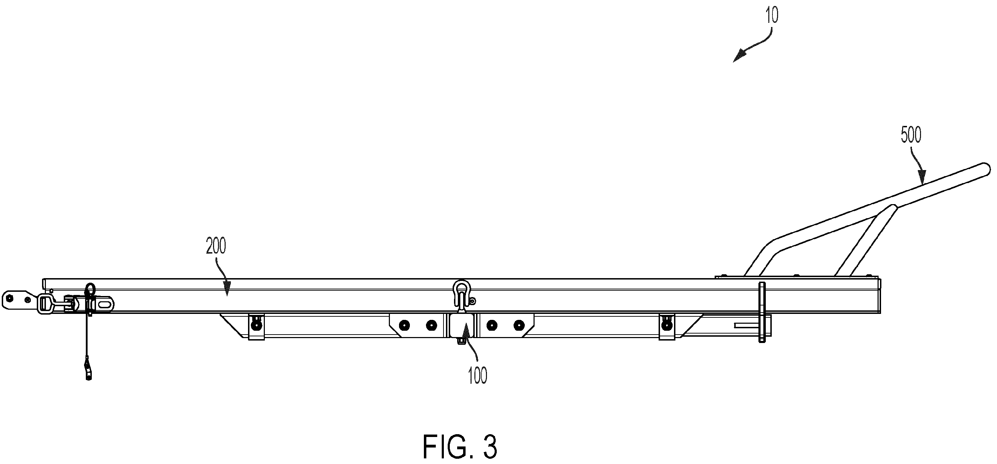

FIG. 3 illustrates a side view of an exemplary embodiment of a hitch mounted carrier (10) for a motorcycle ((5) as shown in FIG. 12).

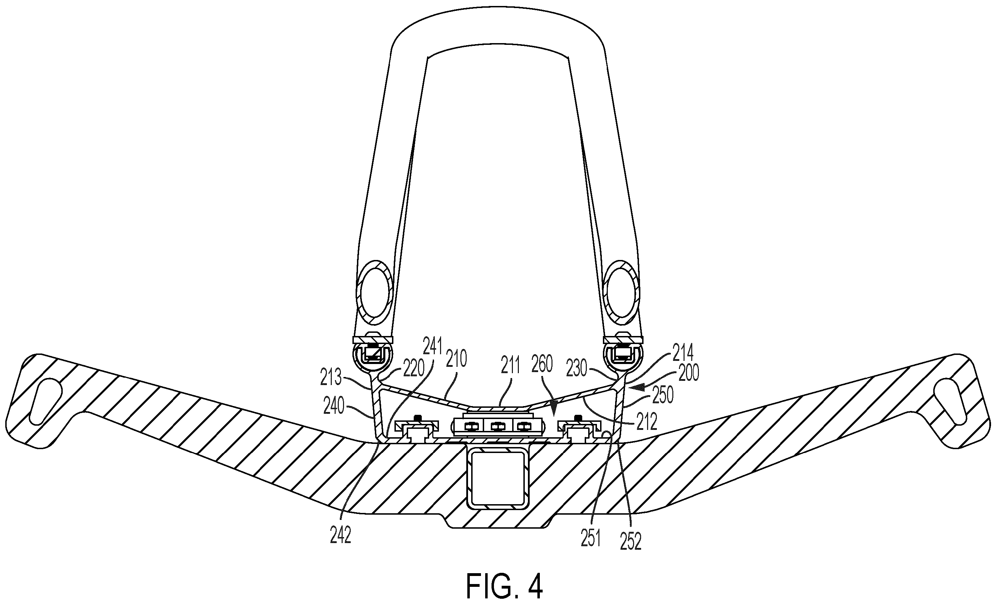

FIG. 4 illustrates a cut-away end view of an exemplary embodiment of a channel (200) for a hitch mounted carrier (10) for a motorcycle ((5) as shown in FIG. 12). As shown in FIG. 4, the channel includes a web (210), a first upper flange (220), a second upper flange (230), a first lower flange (240), and a second lower flange (250).

The web (210) includes a web upper surface (211) and a web lower surface (212) opposite the web upper surface. The first upper flange (220) is attached to and extends upwardly from the web upper surface along at least a portion - in some embodiments all - of a web first edge ((213) as shown in FIG. 2). Similarly, the second upper flange (230) is attached to and extends upwardly from the web upper surface along at least a portion - in some embodiments all - of a web second edge ((214) as shown in FIG. 2). The attachment of the first upper flange and the second upper flange to the web is preferably a permanent connection such as formed by welding the respective upper flange(s) to the web or by manufacturing the web and the upper flange(s) of a single integral piece of material.

The first lower flange (240) is attached to and extends downwardly from the web lower surface (212) along at least a portion - in some embodiments all - of a web first edge ((213) as shown in FIG. 2). Similarly, the second lower flange (250) is attached to and extends downwardly from the web lower surface along at least a portion - in some embodiments all - of a web second edge ((214) as shown in FIG. 2). The attachment of the first lower flange and the second lower flange to the web is preferably a permanent connection such as formed by welding the respective lower flange(s) to the web or by manufacturing the web and the lower flange(s) of a single integral piece of material.

In certain embodiments - such as shown in FIG. 4 - the first lower flange (240) may include a first lip (241) and/or the second lower flange (250) may include a second lip (251). When present, the first lip may extend inwardly from at least a portion - in some embodiments all - of a first lower flange longitudinal edge (242). Similarly, when present, the second lip may extend inwardly from at least a portion - in some embodiments all - of a second lower flange longitudinal edge (252). The attachment of the first lip and/or the second lip to the respective lower flange is preferably a permanent connection such as formed by welding the respective lip(s) to their corresponding lower flange or by manufacturing the lip(s) and the lower flange(s) of a single integral piece of material.

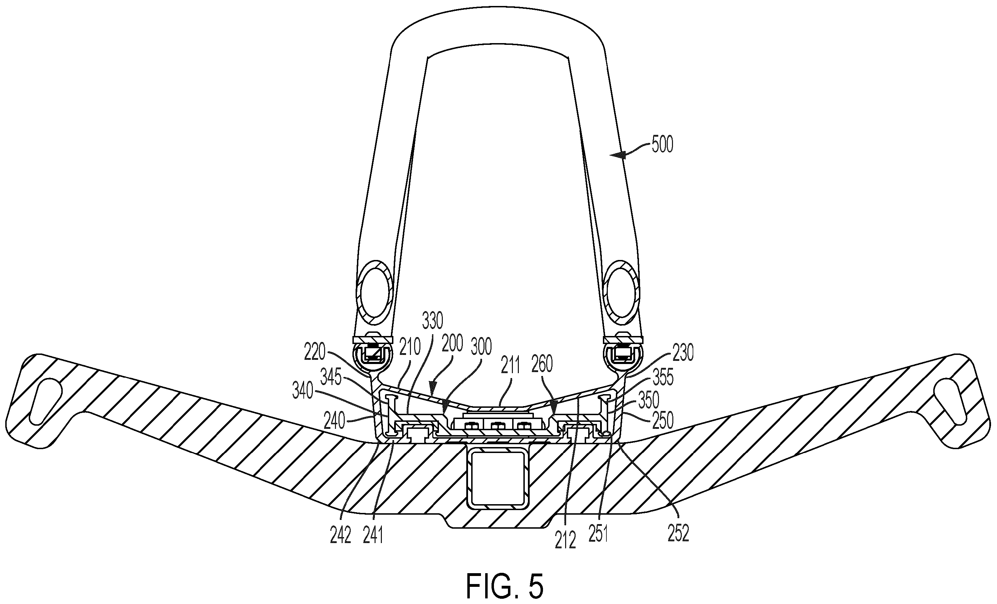

The first lower flange (240) and the second lower flange (250) - along with the web (210), the first lip (241) and the second lip (251) when present - form a gap (260) between the first lower flange and the second lower flange. When the ramp ((300) as shown in FIG. 5) is in a storage position, at least a portion of the ramp will be located within at least a portion of the gap as shown in FIG. 5.

FIG. 5 - which is a cut-away end view of an exemplary embodiment of a channel (200) housing a ramp (300) for a hitch mounted carrier (10) for a motorcycle ((5) as shown in FIG. 12) - also illustrates additional features of an exemplary embodiment of a ramp. As shown in FIG. 5, the ramp may include a ramp upper surface (330), a ramp first edge (340), and a ramp second edge (350). The ramp first edge and the ramp second edge define a ramp width spanning a distance between the ramp first edge and the ramp second edge. Preferably, the ramp width will be greater than or equal to a tire width of one or both tires of a motorcycle ((5) as shown in FIG. 12) which is to be carried on the hitch mounted carrier (10).

Further shown in FIG. 5 are a ramp first flange (345) and a ramp second flange (355). When present, the ramp first flange may be attached to and extend upwardly from the ramp upper surface (330) along at least a portion - in some embodiments all - of the ramp first edge (340). Similarly, when present, the ramp second flange may be attached to and extend upwardly from the ramp upper surface along at least a portion - in some embodiments all - of the ramp second edge (350). The attachment of the ramp first flange and/or the ramp second flange to the ramp upper surface is preferably a permanent connection such as formed by welding the respective ramp flange(s) to ramp upper surface or by manufacturing the ramp of a single integral piece of material.

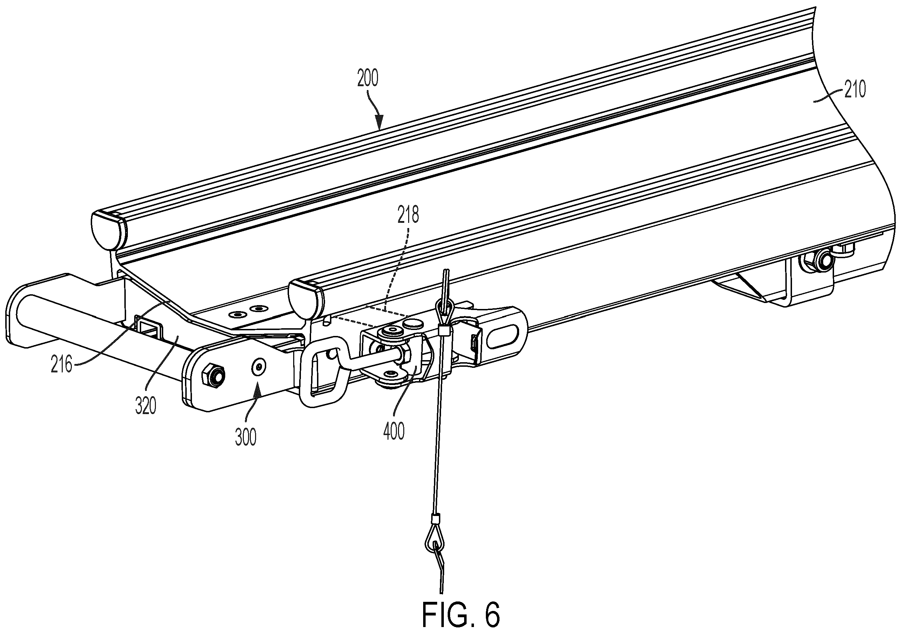

In some embodiments, the hitch mounted carrier (10) may include a lock pin (400) such as illustrated in FIG. 6. When a lock pin is present, the ramp terminal end (320) may include a pin receiver while the web terminal end (216) may include a pin hole (218). The lock pin is configured to pass through at least a portion of the pin hole and into a pin receiver - or behind the ramp terminal end - when the ramp (300) is in a storage position such as shown in FIG. 5. In doing so, the lock pin prevents the ramp from inadvertently extending out of the channel (200). The lock pin may be spring loaded in may include a handle as shown in FIG. 6 allowing a user to easily engage and disengage the lock pin.

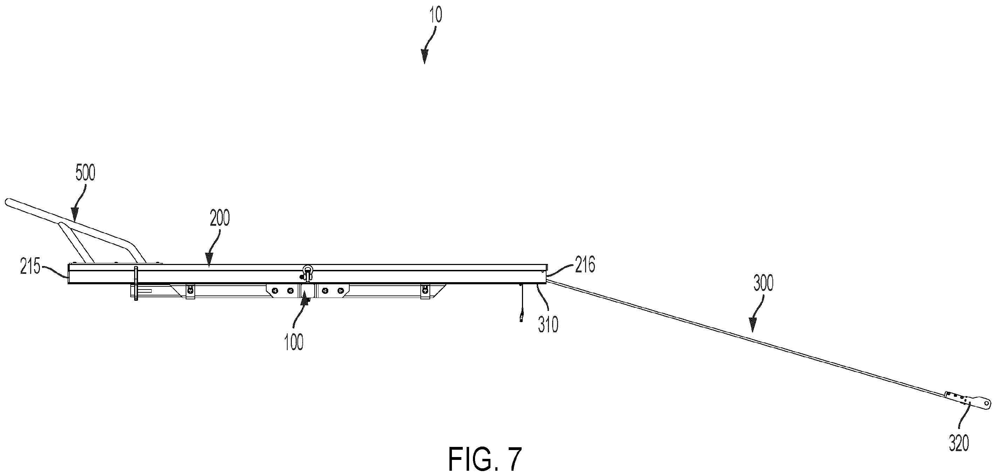

FIG. 7 is a side view of an exemplary embodiment of a hitch mounted carrier (10) for a motorcycle ((5) as shown in FIG. 12) with the ramp in a loading position. As shown in FIG. 7, when the ramp is in the loading position, the ramp is removed from the gap ((260) as shown in FIGS. 4 and 5), and the ramp proximal end (310) interacts with the web terminal end (216). In doing so, a partially or fully continuous surface spanning the distance from the ramp terminal end (320) to the web proximal end (215) is provided allowing a user to roll the motorcycle from ground level up the ramp and onto the web ((210) as shown in FIG. 2) of the channel (200) for storage and transportation. The ramp terminal end and the ramp proximal end (310) defining a ramp length. In certain embodiments, the ramp terminal end may include a handle allowing users to grip the ramp to extend it into and out of the channel.

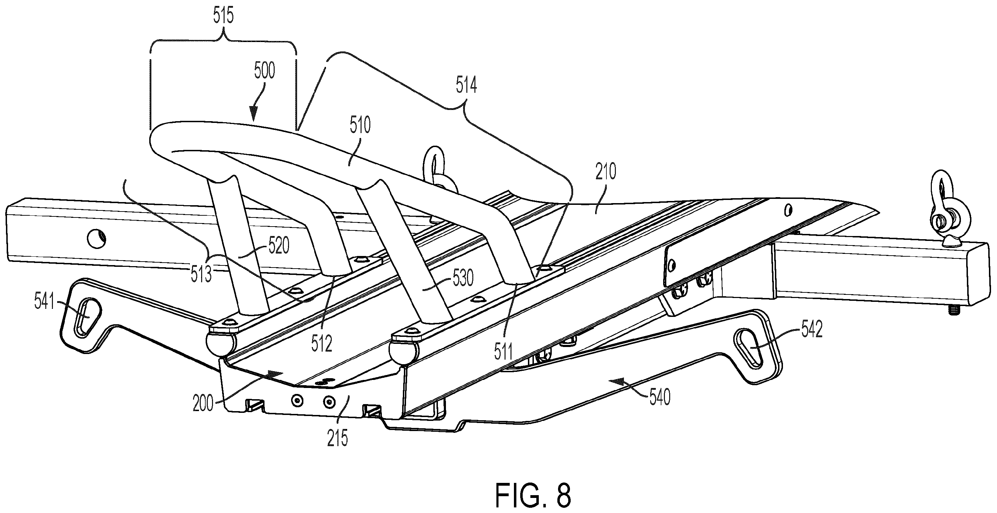

FIG. 8 is a close-up perspective view of a wheel holder (500). As shown in FIG. 8, the wheel holder may extend upwardly from the channel and may include a hoop (510), a first brace (520), and a second brace (530). The hoop may include a hoop first end (511) and a hoop second end (512) with the hoop first end connected to a portion of the channel (200) along the first upper flange (220) (as shown in FIGS. 4 and 5) and the hoop second end connected to a portion of the channel along the second upper flange (230) (as shown in FIGS. 4 and 5). The connection between the hoop and the channel may take many forms. In some embodiments, the connection may be a permanent connection such as welding the hoop to the channel or manufacturing the hoop and the channel of a single integral piece of material. In other embodiments, the connection may be a non-permanent connection in which a fastener - such as one or more bolts (with or without a nut), screws, rivets, clamps, or the like - connects the hoop to the channel. In certain embodiments, one or both of the channel and/or the hoop may include one or more plates permanently connected thereto with a fastener connecting the channel to the hoop via the plate(s).

The hoop (510) may include a first upright (513) extending from the hoop first end (511) and a second upright (514) extending from the hoop second end (512). A top member (515) may extend between the first upright opposite the hoop first end and the second upright opposite the hoop second end. In some embodiments, the first upright and/or the second upright may include a bend along the length of the respective upright as shown in FIG. 8.

The first brace (520) may be attached to and extend between a second portion of the first upper flange (220) (as shown in FIGS. 4 and 5) and a portion of the first upright (513) as shown in FIG. 8. Similarly, the second brace (530) may be attached to and extend between a second portion of the second upper flange (230) (as shown in FIGS. 4 and 5) and a portion of the second upright (514). The connection between the brace(s), the upper flange(s), and the upright(s) may take many forms. In some embodiments, the connection may be a permanent connection such as welding the brace(s) to one or both of the upper flange(s) and/or the upright(s) or manufacturing the brace(s), the hoop, and/or the upper flange(s) of a single integral piece of material. In other embodiments, the connection may be a non-permanent connection in which a fastener - such as one or more bolts (with or without a nut), screws, rivets, clamps, or the like - connects the brace(s) to their respective upright(s) and upper flange(s).

In some embodiments, the wheel holder (500) may also include a tie down plate (540). When present, the tie down plate may attach to the channel (200) at or about the web lower surface (212) substantially perpendicular with the web length and substantially parallel with the connector length ((140) as shown in FIG. 2). The tie down plate may include a first tie down hole (541) and a second tie down hole (542) at or about opposing ends of the tie down plate. These tie down holes serve as an anchor point for connecting a tie down - such as a bungee cord, a ratchet strap, or the like - for securing the motorcycle ((5) as shown in FIG. 12) to the hitch mounted carrier (10).

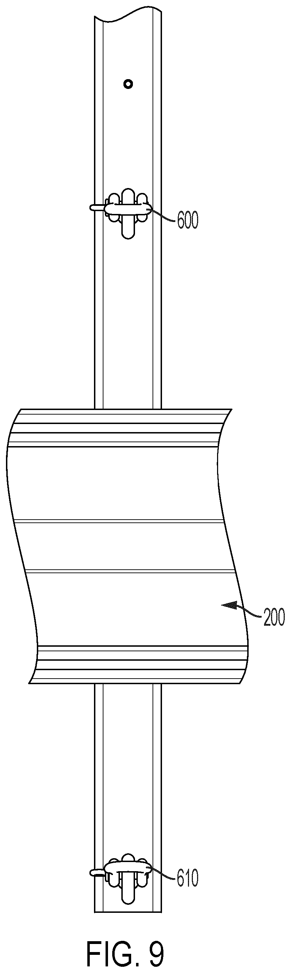

Instead of - or in addition to - securing the motorcycle ((5) as shown in FIG. 12) to the hitch mounted carrier (10) using a tie down connected to opposing tie down holes in the tie down plate (540) - a pair of strap mounts may be provided as shown in FIG. 9. The first strap mount (600) may be attached to and extend from the connector upper surface (110) between the connector proximal end (120) (as shown in FIG. 2) and the channel (200). The second strap mount (610) may be attached to and extend from the connector upper surface at or about the connector terminal end (130) (as shown in FIG. 2). A strap - such as a chain, a ratchet strap, a cam buckle strap or the like - for securing the motorcycle to the hitch mounted carrier may be connected to the opposing strap mounts and wrap around or through a portion of the motorcycle - or connect to the motorcycle foot pegs or frame.

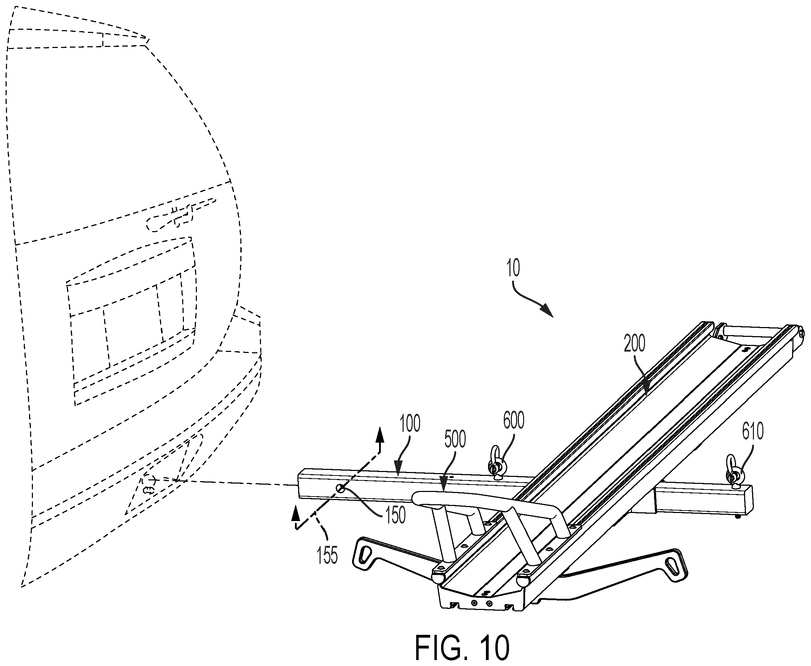

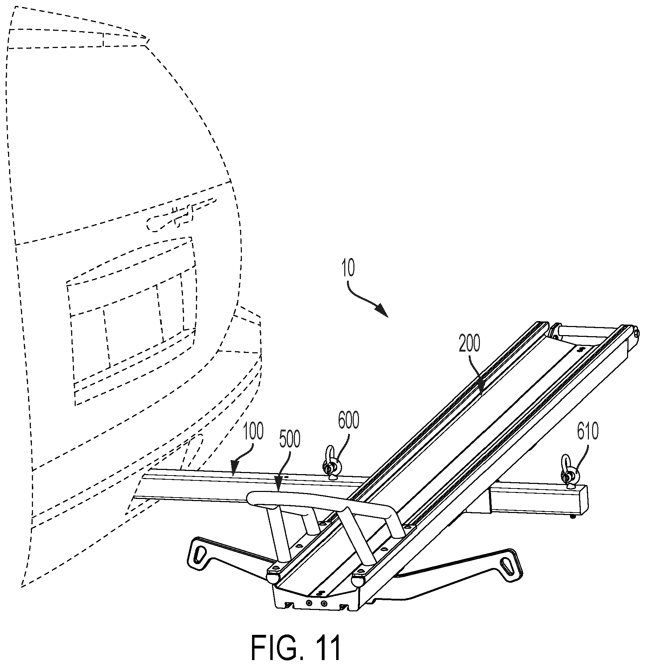

FIG. 10 and FIG. 11 illustrate exemplary embodiments of connecting the hitch mounted carrier (10) to a vehicle. First the hitch connector (100) is aligned with a hitch receiver on the rear of the vehicle as shown in FIG. 10. Preferably, the hitch connector will include a hitch pin hole (150) passing through the hitch connector at or about the connector proximal end (120) (as shown in FIG. 2) with a central axis (155) of the hitch pin hole being substantially parallel with the web length. Then the hitch connector is inserted into the hitch receiver as shown in FIG. 11 and a hitch pin (not illustrated) is passed through the hitch pin hole (and a corresponding hole in the hitch receiver) and secured to prevent the hitch connector from retracting out of the hitch receiver.

FIGS. 12 to 16 illustrate the process of loading a motorcycle (5) onto the hitch mounted carrier (10). First the hitch mounted carrier is connected to a vehicle - preferably as shown in FIGS. 10 and 11 and a motorcycle is provided with the motorcycle on ground level as shown in FIG. 12. In this first step, the ramp (300) may be in a storage position.

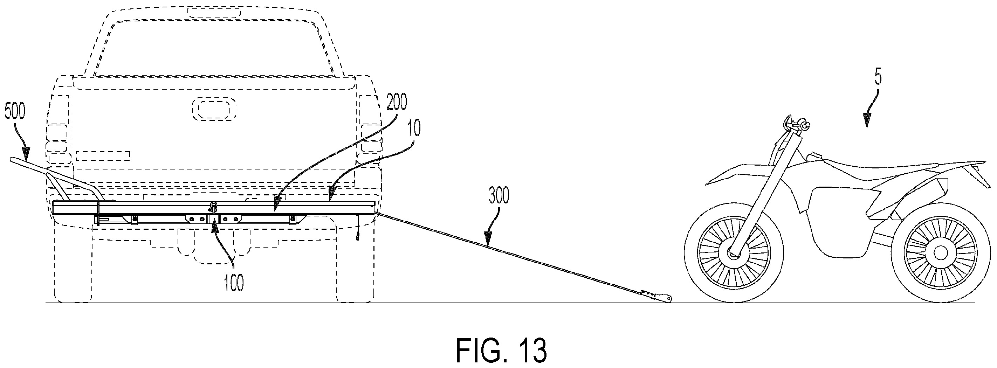

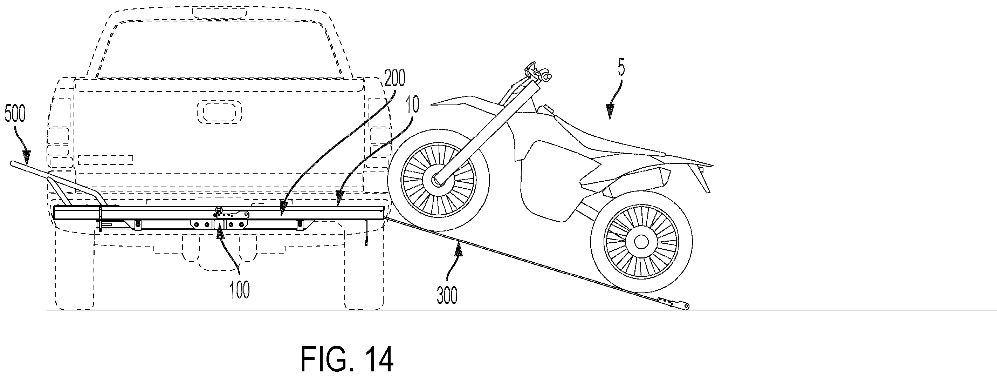

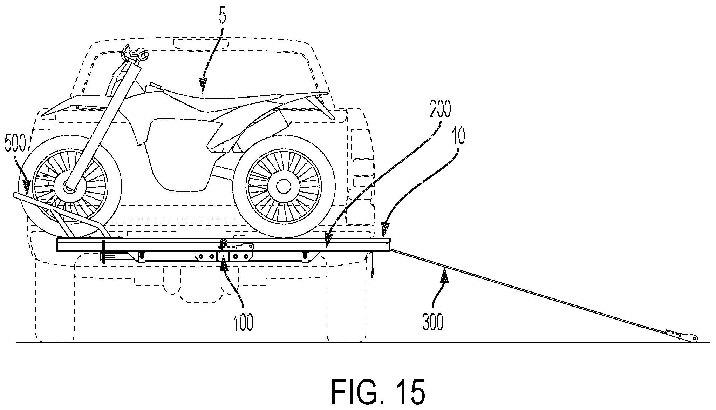

Next, the ramp (300) is extended from the storage position into a loading position as shown in FIG. 13 with the ramp proximal end (310) interacts with the web terminal end (216) as described herein. At this point, a user may ride or push the motorcycle up the ramp as shown in FIG. 14. Once the motorcycle has been advanced up the ramp and onto the channel (200) as shown in FIG. 15, a user may secure the motorcycle to the hitch mounted carrier - which may include connecting tie downs such as chains, ratchet straps, cam straps or the like between the motorcycle and the pair of strap mounts (600/610) (as shown in FIG. 9) and/or between the motorcycle and the pair of tie-down holes (541/542) (as shown in FIG. 8) - or connect to the motorcycle foot pegs or frame.

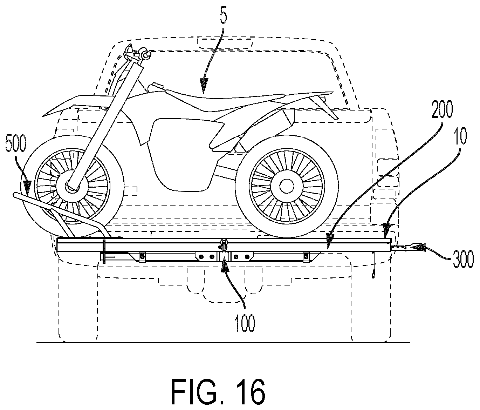

Following advancement of the motorcycle (5) onto the channel (200), the ramp (300) may be returned to the storage position as shown in FIG. 16. Optionally, the ramp may be secured to the channel by the lock pin (400) as described herein. In doing so, the hitch mounted carrier (10) with the motorcycle secured to the channel is ready to be safely and securely driven to the user's desired location using the vehicle.

The components of the hitch mounted carrier described herein may be made of a number of commonly known materials utilizing common manufacturing materials. Preferred materials for the hitch connector, the channel, the ramp, and the wheel holder are metal materials such as aluminum, steel, stainless steel, and the like. However, other materials such as rigid polymers and fiber reinforced polymers may be utilized in some embodiments. Exemplary manufacturing techniques include cutting, grinding, welding, milling, casting, forging, injection molding, and the like.

The hitch mounted carrier described herein being specifically designed for transporting a motorcycle allows a user to quickly and easily load and unload the motorcycle without the need for lifting or improvising a ramp by simply extending and retracting the provided ramp into and out of the channel as described herein. The ramp may be easily stored within the hitch mounted carrier itself as described herein thereby eliminating the need to store the ramp in the vehicle where it reduces the amount of available space for transporting other equipment such as toolboxes, coolers, tents, and the like. Additionally, the hitch mounted carrier described herein includes ample structures - such as the wheel holder, tie down plate, and strap mounts - so that the motorcycle can be secured to the hitch mounted carrier during transportation.

While the hitch mounted carrier has been described as having one or more exemplary designs, the present article may be further modified within the spirit and scope of this disclosure. This application is therefore intended to cover any variations, uses, or adaptations of the hitch mounted carrier using its general principles.

## Claims

1. A hitch mounted carrier (10) for a motorcycle (5), said hitch mounted carrier comprising:
a hitch connector (100) comprising a connector upper surface (110), a connector proximal end (120), and a connector terminal end (130) said connector proximal end and said connector terminal end defining a connector length (140);
a channel (200) connected to a first portion of the connector upper surface, said channel comprising:
a web (210) having a web upper surface (211), a web lower surface (212) opposite the web upper surface, a web first edge (213), a web second edge (214) opposite the web first edge, a web proximal end (215), and a web terminal end (216) said web proximal end and said web terminal end defining a web length (217) which is substantially perpendicular to the connector length;
a first upper flange (220) attached to and extending from the web upper surface along at least a portion of the web first edge;
a second upper flange (230) attached to and extending from the web upper surface along at least a portion of the web second edge;
a first lower flange (240) attached to and extending from the web lower surface along at least a portion of the web first edge; and
a second lower flange (250) attached to and extending from the web lower surface along at least a portion of the web second edge; and
a ramp (300) having a ramp proximal end (310) and a ramp terminal end (320) defining a ramp length; and
wherein said ramp extends between a storage position located within a gap (260) formed between the first lower flange and the second lower flange, and a loading position in which the ramp is removed from the gap and the ramp proximal end interacts with the web terminal end.

2. The hitch mounted carrier of claim 1, wherein the first lower flange includes a first lip (241) extending inwardly from a portion of a first lower flange longitudinal edge (242).

3. The hitch mounted carrier of claim 1, wherein the second lower flange includes a second lip (251) extending inwardly from a portion of a second lower flange longitudinal edge (252).

4. The hitch mounted carrier of claim 1, wherein the ramp comprises a ramp upper surface (330), a ramp first edge (340), a ramp first flange (345) attached to and extending upwardly from the ramp upper surface along at least a portion of the ramp first edge, a ramp second edge (350), and a ramp second flange (355) attached to and extending upwardly from the ramp upper surface along at least a portion of the ramp second edge.

5. The hitch mounted carrier of claim 1, further comprising a lock pin (400) wherein the ramp terminal end comprises a pin receiver, the web terminal end includes a pin hole (218), and the lock pin is configured to pass through the pin hole and into the pin receiver when the ramp is in the storage position.

6. The hitch mounted carrier of claim 1, further comprising a wheel holder (500) attached to and extending upwardly from the channel at or about the web proximal end.

7. The hitch mounted carrier of claim 1, further comprising a first strap mount (600) attached to and extending from the connector upper surface between the connector proximal end and the connector terminal end, and a second strap mount (610) attached to and extending from the connector upper surface at the connector terminal end.

8. The hitch mounted carrier of claim 1, wherein the hitch connector comprises a hitch pin hole (150) passing through the hitch connector at the connector proximal end, wherein a central axis (155) of said hitch pin hole is substantially parallel with the web length.

9. The hitch mounted carrier of claim 2, wherein the second lower flange includes a second lip (251) extending inwardly from a portion of a second lower flange longitudinal edge (252).

10. The hitch mounted carrier of claim 4, further comprising a lock pin (400) wherein the ramp terminal end comprises a pin receiver, the web terminal end includes a pin hole (218), and the lock pin is configured to pass through the pin hole and into the pin receiver when the ramp is in the storage position.

11. The hitch mounted carrier of claim 4, further comprising a wheel holder (500) attached to and extending upwardly from the channel at or about the web proximal end.

12. The hitch mounted carrier of claim 6, wherein the wheel holder comprises:
a hoop (510) having a hoop first end (511), a hoop second end (512), a first upright (513) extending from the hoop first end, a second upright (514) extending from the hoop second end, and a top member (515) extending between the first upright opposite the hoop first end and the second upright opposite the hoop second end with said hoop first end attached to a first portion of the first upper flange and said hoop second end attached to a first position of the second upper flange;
a first brace (520) attached to and extending between a second portion of the first upper flange and a portion of the first upright; and
a second brace (530) attached to and extending between a second portion of the second upper flange and a portion of the second upright.

13. The hitch mounted carrier of claim 9, wherein the ramp comprises a ramp upper surface (330), a ramp first edge (340), a ramp first flange (345) attached to and extending from the ramp upper surface along at least a portion of the ramp first edge, a ramp second edge (350), and a ramp second flange (355) attached to and extending from the ramp upper surface along at least a portion of the ramp second edge.

14. The hitch mounted carrier of claim 9, further comprising a lock pin (400) wherein the ramp terminal end comprises a pin receiver, the web terminal end includes a pin hole (218), and the lock pin is configured to pass through the pin hole and into the pin receiver when the ramp is in the storage position.

15. The hitch mounted carrier of claim 9, further comprising a wheel holder (500) attached to and extending upwardly from the channel at or about the web proximal end.

16. The hitch mounted carrier of claim 11, wherein the wheel holder comprises:
a hoop (510) having a hoop first end (511), a hoop second end (512), a first upright (513) extending from the hoop first end, a second upright (514) extending from the hoop second end, and a top member (515) extending between the first upright opposite the hoop first end and the second upright opposite the hoop second end with said hoop first end attached to a first portion of the first upper flange and said hoop second end attached to a first position of the second upper flange;
a first brace (520) attached to and extending between a second portion of the first upper flange and a portion of the first upright; and
a second brace (530) attached to and extending between a second portion of the second upper flange and a portion of the second upright.

17. The hitch mounted carrier of claim 12, further comprising a first strap mount (600) attached to and extending from the connector upper surface between the connector proximal end and the connector terminal end, and a second strap mount (610) attached to and extending from the connector upper surface at the connector terminal end.

18. The hitch mounted carrier of claim 15, wherein the wheel holder comprises:
a hoop (510) having a hoop first end (511), a hoop second end (512), a first upright (513) extending from the hoop first end, a second upright (514) extending from the hoop second end, and a top member (515) extending between the first upright opposite the hoop first end and the second upright opposite the hoop second end with said hoop first end attached to a first portion of the first upper flange and said hoop second end attached to a first position of the second upper flange;
a first brace (520) attached to and extending between a second portion of the first upper flange and a portion of the first upright; and
a second brace (530) attached to and extending between a second portion of the second upper flange and a portion of the second upright.

19. The hitch mounted carrier of claim 16, further comprising a first strap mount (600) attached to and extending from the connector upper surface between the connector proximal end and the connector terminal end, and a second strap mount (610) attached to and extending from the connector upper surface at the connector terminal end.

20. The hitch mounted carrier of claim 18, further comprising a first strap mount (600) attached to and extending from the connector upper surface between the connector proximal end and the connector terminal end, and a second strap mount (610) attached to and extending from the connector upper surface at the connector terminal end.
